# FASCICULE DE BREVET EUROPEEN

(11) **EP 1 282 351 B1**
(45) Date de publication et mention de la délivrance du brevet: **21.12.2005**
(21) Numéro de dépôt: 01936583.2
(22) Date de dépôt: 18.05.2001
(51) Int. Cl.: A01G 3/04, A01G 17/02

(54) **EFFEUILLEUSE, PLUS SPECIALEMENT DESTINEE A L'EFFEUILLAGE SELECTIF DE LA VIGNE**
ENTBLÄTTERUNGSMASCHINE, INSBESONDERE ZUR SELEKTIVEN ENTBLÄTTERUNG DER REBE
LEAF STRIPPER, MORE PARTICULARLY DESIGNED FOR SELECTIVE VINE LEAF STRIPPING

(30) Priorité: 19.05.2000 FR 0006459
(43) Date de publication de la demande: 12.02.2003
(73) Titulaire: PELLENC (Société Anonyme), 84120 Pertuis (FR)
(72) Inventeur: PELLENC, Roger, F-84120 Pertuis (FR); BONNARD, Christian, F-84120 Pertuis (FR)
(74) Mandataire: Marek, Pierre
(86) Numéro de dépôt international: PCT/FR2001/001536
(87) Numéro de publication internationale: WO 2001/087047

(56) Documents cités:
- EP-A- 0 278 607
- EP-A- 0 597 253
- DE-A- 2 931 564
- FR-A- 2 483 168

## Description

L'invention concerne une effeuilleuse, plus particulièrement destinée à réaliser l'effeuillage sélectif de la vigne.

L'effeuillage est une technique qui consiste à éliminer les feuilles situées dans la zone fructifère des plants. Pratiquée manuellement depuis longtemps dans certains vignobles, cette opération qui vise à améliorer la qualité de la récolte et à faciliter les travaux manuels d'éclaircissage et de cueillette connaît un intérêt croissant avec le développement de l'effeuillage mécanique.

Les intérêts de l'effeuillage sont multiples :
- Favoriser l'aération des grappes de raisin pour diminuer la pourriture.
- Favoriser l'éclaircissement pour améliorer la coloration (pellicule du raisin plus épaisse).
- Eclaircir le matelas végétal dans la zone fructifère, pour une meilleure pénétration et localisation des traitements (botrytis-oidium-pourriture grise-vers de la grappe-mildiou...).
- Améliorer la maturation des grappes par une meilleure exposition au soleil (grappes plus lourdes, arômes plus développés et meilleur état sanitaire de la vendange).
- Favoriser l'accès aux grappes pour réduire les temps de main d'oeuvre sur des opérations manuelles telles que l'éclaircissage (-50 %), la vendange manuelle (- 30 % à - 40 %).
- Réduire le feuillage pour limiter les pertes de jus dues à l'aspiration des feuilles du reste de la vendange en récolte mécanique.
- Faciliter le séchage en cas de pluie par une meilleure exposition au soleil et une meilleure aération.

L'effeuillage s'avère donc une opération très intéressante, qui correspond bien au souci d'optimisation des tâches et de recherche de qualité de récolte.

Plusieurs machines et procédés ont été proposés à ce jour et certains d'entre eux sont actuellement encore utilisés pour l'accomplissement de ce travail.

Dans le document FR-2.417.932 A, est décrit un dispositif d'effeuillage utilisant une cage cylindrique rotative à claire-voie destinée à rouler sur le matelas végétal et à l'intérieur de laquelle est logé fixement un cylindre creux muni d'une ouverture. Un aspirateur monté au-dessus du cylindre intérieur creux permet de créer, à l'intérieur de ce dernier, une dépression ayant pour effet d'aspirer les feuilles de la végétation et de les plaquer contre la cage rotative à claire-voie. Des galets montés sur des supports articulés sont appliqués sous pression contre la surface latérale de la cage et sont entraînés en rotation par cette dernière. Les feuilles viennent se coincer entre le tambour à claire-voie et les galets, et sont arrachées des rameaux sous la force de traction résultant du déplacement de la machine.

A priori, le principe de l'écartement du feuillage au moyen du flux aspirant d'une turbine à travers un tambour rotatif à claire-voie permettant de tirer et de plaquer les feuilles sur la surface latérale dudit tambour semble astucieux et économique en puissance. Il ne semble pas cependant que la machine décrite dans le document FR-2.417.932 ait été mise sur le marché, et, à la connaissance de la déposante, aucune effeuilleuse utilisant ce principe n'est aujourd'hui commercialisée.

L'insuccès de cette machine découle certainement du fait que le principe d'arrachement des feuilles au moyen de galets à friction ne semble pas pouvoir être appliqué concrètement pour plusieurs raisons :
- suivant le descriptif et les dessins du document FR-2.417.932, les supports articulés et montés sur ressorts portant les galets sont appelés à être disposés, en cours de travail, dans le matelas végétal ; cette disposition est inapplicable du fait que ces supports frottent dans le matelas végétal et contrarient l'aspiration des feuilles, car ils repoussent la végétation ; il n'est pas possible de disposer des organes mécanique dans le matelas végétal au delà de la paroi de la cage rotative, car ceux-ci se télescoperaient et seraient arrachés par divers obstacles situés dans l'axe du rang de vigne tels que tuteurs, tendeurs de fils et, surtout, piquets ;
- du fait de l'effort relativement important nécessaire pour supprimer les feuilles par arrachement, il est peu probable que l'effort généré par la friction des galets sur le tambour suffise, surtout si des feuilles ou des sarments s'interposent entre la paroi de la cage et les galets ;
- ce dispositif, de par son emplacement par rapport au matelas végétal, et de par son principe de sectionnement des feuilles par arrachement, ne peut qu'occasionner un bourrage du système par accumulation de végétaux et abîmer la vigne.

Le document FR-2.390.084 décrit une effeuilleuse mécanique basée sur l'aspiration des feuilles au moyen d'une turbine à travers une grille fixe, disposée devant les pales de ce dernier. Les pales affûtées de l'hélice de la turbine servent de moyen de sectionnement des feuilles. Ce système est bien connu, la plupart des effeuilleuses actuellement commercialisées fonctionnent sur ce principe.

Ces machines nécessitent une forte dépression pour aspirer les feuilles dans le système de sectionnement réalisé par les pales de la turbine. Ces effeuilleuses lourdes et encombrantes ne disposent pas de système de positionnement de la turbine d'effeuillage par rapport au matelas végétal. C'est la dextérité du chauffeur, par la précision de sa conduite, nécessairement à faible vitesse, qui assure la qualité de l'effeuillage. Ce principe rend le taux d'effeuillage approximatif, le taux de blessure sur les grappes élevé ; la puissance d'aspiration importante pour un effeuillage efficace limite la vitesse d'évolution de l'effeuilleuse. Les projections des particules de feuilles déchiquetées et la poussière soulevée par ce type de machine sont des inconvénients majeurs sur le plan sanitaire.

Dans le document FR-2.406.384 est décrite une machine à effeuiller la vigne utilisant le souffle d'un ventilateur à travers le matelas végétal, pour pousser les feuilles à travers la paroi d'un tambour rotatif à claire-voie, disposé en vis à vis. Le tambour à claire voie roule sur le matelas végétal, les feuilles poussées par le soufflant à travers la paroi à bandes horizontales du tambour rotatif, sont sectionnées par des couteaux tournant à l'intérieur de celle-ci.

Cette solution présente plusieurs inconvénients qui expliquent vraisemblablement son absence sur le marché, tels que, par exemple :
- difficulté de canaliser avec précision le flux d'air soufflant à travers le matelas végétal, car sarments, grappes, et piquets interposés entre le ventilateur et la cage ou tambour perturbent et dévient le flux d'air, empêchant les feuilles de pénétrer dans la cage en vis-à-vis ;
- tel que décrit et dessiné dans le document FR 2.406.384, la cage rotative qui sectionne les feuilles est montée du côté opposé au tracteur, l'opérateur ne dispose d'aucune visibilité sur la zone effeuillée, cette architecture lourde et encombrante, est donc inappropriée à cette opération qui demande une surveillance permanente sur le taux de feuilles supprimées et les risques de blessures éventuelles sur les grappes ;
- enfin, aucun dispositif d'évacuation des feuilles coupées à l'intérieur de la cage n'est prévu, on peut donc s'attendre à un bourrage rapide par accumulation de bris de coupe à l'intérieur du tambour.

Le document EP-0.597.253 décrit très sommairement une effeuilleuse automatique viticole comprenant un système d'aspiration du feuillage au moyen d'un aspirateur centrifuge et d'une bouche d'aspiration linéaire, un dispositif de sectionnement des feuilles au moyen d'une lame de coupe à déplacement alternatif placé à proximité de ladite bouche d'aspiration linéaire, un rouleau installé à l'avant du système d'aspiration pour permettre de séparer les feuilles des grappes et un tapis roulant disposé devant la tête d'effeuillage et dont la vitesse de déplacement est synchronisée avec la vitesse de déplacement de l'effeuilleuse. Ce tapis roulant permet de prendre appui sur le matelas végétal, sans occasionner de frottement sur les grappes de raisin.

Les effeuilleuses actuellement commercialisées sur la base des dispositions décrites dans ce document, ne sont cependant pas équipées du tapis roulant dont la présence est la cause d'inconvénients en regard desquels le résultat recherché paraît secondaire. En effet, l'action du tapis en amont de la tête d'effeuillage canalise et repousse probablement feuilles et grappes, mais le tapis s'arrête devant la bouche d'aspiration. Lors du passage de cette végétation devant la bouche d'aspiration où est localisée la lame de coupe, le tapis n'agit plus. La présence de ce tapis devant le système d'aspiration et de sectionnement des végétaux n'est donc d'aucune efficacité, en ce qui concerne la dissociation des feuilles et des grappes.

Pour séparer les feuilles des grappes, un rouleau vertical est disposé à l'avant du système d'aspiration et de coupe, entre le tapis roulant et ledit système, mais après le passage de ce rouleau, rien n'empêche que les grappes soient aspirées avec les feuilles et sectionnées en même temps que ces dernières.

En outre, dans les montages connus de têtes d'effeuillage, les barres de coupe comprenant une lame à déplacement alternatif occasionnent un pourcentage relativement important de blessures sur les grappes, notamment dans un montage du genre de celui qui est décrit dans le document EP-0 597 253.

Dans le document EP-0.898.877, est décrit un dispositif pour l'effeuillage des vignes utilisant le principe connu d'attirer les feuilles au moyen d'une bouche d'aspiration et de sectionnement de ces dernières au moyen d'une lame à déplacement alternatif. L'originalité de ce dispositif résiderait dans son aptitude à positionner automatiquement, la tête d'effeuillage par rapport au matelas végétal suivant deux plans, grâce à deux capteurs électriques prenant appui sur le rang de vigne, l'un des capteurs pilote un vérin hydraulique qui règle la profondeur d'effeuillage, l'autre capteur pilote un vérin qui incline la tête d'effeuillage, pour l'adapter au profil du matelas végétal.

Ce principe de contournement du matelas végétal est intéressant en théorie, mais il présente cependant quelques inconvénients, notamment liés aux balancements de la machine et à l'irrégularité du matelas végétal, qui nécessitent des modifications de positions de la tête d'effeuillage, intempestives et brutales. Cette effeuilleuse, de par les temps de réponse des asservissements, et de par l'inertie générée par les changements rapides de positions de la tête d'effeuillage, n'est pas adaptée aux terrains cahoteux, et ne peut évoluer qu'à faible vitesse. Sa conception est lourde, et complexe.

L'invention a notamment pour but de remédier aux importants inconvénients des machines d'effeuillage décrites dans les documents de l'art antérieur et/ou actuellement proposées sur le marché.

Dans ce but, on a retenu une machine comprenant un dispositif d'effeuillage comportant un tambour rotatif à claire-voie, un moyen d'aspiration permettant de générer un flux d'air aspirant traversant la paroi latérale cylindrique ajourée dudit tambour, et un moyen pour canaliser ce flux d'air à travers une portion changeante de ladite paroi latérale.

Suivant ce principe d'aspiration des feuilles par contact direct avec le matelas végétal, il apparaît que le flux de dépression nécessaire pour happer et plaquer les feuilles contre la paroi latérale à claire-voie du tambour rotatif, peut être relativement faible par rapport aux effeuilleuses classiques qui se tiennent relativement éloignées du matelas végétal, ce qui nécessite une dépression très importante et, par conséquent, beaucoup de puissance pour attirer les feuilles dans le système d'effeuillage.

Selon une première disposition caractéristique de l'invention, le système d'effeuillage proprement dit est constitué par un moyen de coupe installé à proximité de la portion aspirante de la paroi latérale du tambour tournant et orienté parallèlement ou sensiblement parallèlement à l'axe de rotation de cette dernière.

Selon une autre disposition caractéristique très importante de l'invention, le moyen de coupe est disposé en arrière d'un plan diamétral du tambour tournant orienté perpendiculairement au sens d'avancement de la machine en cours de travail.

Grâce aux dispositions caractéristiques ci-dessus, la machine permet de réaliser un effeuillage de qualité assimilable à un rognage du matelas végétal, compte tenu du fait que les queues de feuilles sont coupées et non déchiquetées, contrairement aux solutions déjà proposées qui enlèvent les feuilles par arrachement au moyen d'hélices ou de couteaux, ou de galets de coincement.

Après sectionnement de leur pédoncule, les feuilles restent plaquées contre la paroi latérale ajourée du tambour tournant, et sont entraînées hors du champ d'aspiration par la rotation de cette dernière. Lorsque la portion de paroi latérale tapissée de feuilles coupées se trouve isolée du champ d'aspiration par le déflecteur de canalisation du flux d'aspiration, les feuilles n'étant plus soumises à l'attraction du flux d'air, chutent par gravité. Ce résultat constitue un autre avantage, car il supprime les projections de feuilles déchiquetées susceptibles d'occasionner des risques de maladies du fait des particules et de la poussière propulsées par le souffle de la turbine sur les rangs de vigne voisins.

Selon une autre disposition caractéristique de l'invention, la tête d'effeuillage ou chaque tête d'effeuillage de l'effeuilleuse comprend une chenille de guidage s'enroulant sur le tambour aspirant tournant, cette chenille de guidage ayant, sur le côté de la tête d'effeuillage appelé à se trouver face au matelas végétal, en cours de travail, une trajectoire rectiligne, parallèle à l'axe d'avancement de l'effeuilleuse, de sorte à présenter une surface d'appui plane.

La chenille ajourée ainsi réalisée a pour fonction d'assurer un bon guidage et la stabilité de la tête d'effeuillage sur le matelas végétal. Elle assure un appui souple de la tête d'effeuillage sur le matelas végétal, en évitant l'écrasement de ce dernier en raison de sa grande surface de contact.

Selon une autre disposition caractéristique de l'invention, un moyen de coupe est disposé verticalement devant le dispositif d'effeuillage et à distance de celui-ci, ce moyen de coupe pouvant être constitué par une barre de coupe alternative ou dispositif analogue. Cette barre de coupe permet de rogner le rang de vigne sur toute sa hauteur, afin de couper toutes les feuilles et les sarments les plus éloignés de la zone fructifère. Elle permet de réaliser une première ébauche : elle dégrossit le matelas végétal, dans le but de réduire le volume de feuilles à supprimer par le dispositif d'effeuillage proprement dit.

Les buts, caractéristiques et avantages ci-dessus, et d'autres encore, ressortiront mieux de la description qui suit et des dessins annexés dans lesquels :
La figure 1 est une vue en élévation d'un premier exemple de réalisation d'une effeuilleuse selon l'invention, représentée attelée à l'arrière d'un tracteur agricole classique.
La figure 2 est une vue en plan de la figure 1, montrant l'effeuilleuse comprenant deux têtes d'effeuillage symétriques.
La figure 3 est une vue en élévation et de face de l'une des têtes ou modules d'effeuillage de cette effeuilleuse et de son dispositif de suspension.
La figure 4 est une vue de côté suivant flèche F1 de la figure 3.
La figure 5 est une vue de face, à plus grande échelle et avec coupes partielles, d'une tête d'effeuillage.
La figure 6 est une vue de détail, en coupe diamétrale et à plus grande échelle, illustrant les moyens d'entraînement en rotation du tambour à claire-voie rotatif.
La figure 7 est une vue en plan de la tête d'effeuillage, représentée sans la chenille de guidage supérieure.
La figure 8 est une vue en plan illustrant la tête d'effeuillage, avec sa chenille d'appui, en cours de travail.
La figure 9 est une vue en plan illustrant le travail effectué par l'effeuilleuse.
La figure 10 est une vue de face, à caractère schématique, selon flèche F2 de la figure 9.
La figure 11 est une vue frontale d'une tête d'effeuillage et de son châssis porteur.
La figure 12 est une vue en coupe axiale d'une tête d'effeuillage, selon un autre mode de réalisation de l'invention.
La figure 13 est une vue de face de l'effeuilleuse, représentée en cours de travail.
La figure 14 est une vue en plan de la figure 13.
La figure 15 est une vue en plan montrant le mouvement latéral des modules d'effeuillage par rapport au matelas végétal.
La figure 16 est une vue en plan, avec arrachement partiel, montrant le pivotement vertical des modules d'effeuillage par rapport au matelas végétal.
La figure 17 est une vue frontale, avec arrachement partiel, montrant le basculement horizontal des modules d'effeuillage par rapport au matelas végétal.
La figure 18 illustre le pivotement du châssis portant les modules d'effeuillage.
La figure 19 est une vue en plan de la figure 18.

On se reporte auxdits dessins pour décrire des exemples de réalisation avantageux, bien que nullement limitatifs, de l'effeuilleuse selon l'invention.

Bien que l'on se réfère, dans la suite du présent exposé, uniquement à l'utilisation de cette effeuilleuse pour réaliser un effeuillage sélectif de la vigne, il est évident qu'un tel emploi n'est pas limitatif et que cette machine pourrait être utilisée pour réaliser l'effeuillage d'autres plantes cultivées sous forme d'arbustes alignés.

Cette effeuilleuse comprend au moins une tête d'effeuillage 1 comportant un tambour rotatif aspirant 2 constitué d'une paroi cylindrique à claire-voie 3, dont le maillage est assimilable à un rouleau en grillage.

Ce tambour à claire-voie peut avoir, par exemple, une hauteur comprise entre 400 mm et 800 mm, suivant les modèles d'effeuilleuses, et un diamètre de l'ordre de 400 mm.

La paroi latérale ajourée ou grille cylindrique du tambour peut être réalisée à partir d'une tôle perforée ou d'un tissu métallique tressé, voire de fils métalliques croisés de section de l'ordre de 2 mm, définissant un quadrillage dont les mailles de section carrée ont, par exemple, une dimension de l'ordre de 8 mm x 8 mm. La section des ouvertures ou mailles de la paroi cylindrique à claire-voie est définie de sorte à permettre de plaquer les feuilles à supprimer sur la paroi latérale ajourée du tambour, par effet d'aspiration, tout en empêchant les grains de raisin et autres débris de coupe, de pénétrer à l'intérieur dudit tambour.

Une turbine aspirante, par exemple constituée par un ventilateur axial ou par un aspirateur centrifuge 4 actionné par un moteur hydraulique M2, est installée au-dessus du tambour 2, pour créer une dépression à l'intérieur dudit tambour, laquelle génère un flux d'aspiration traversant la paroi latérale ajourée de ce dernier, en provoquant le "collage" des feuilles du matelas végétal sur ladite paroi ajourée ou grille du tambour. On observe que l'air du flux aspirant généré par la turbine pour happer les feuilles reste propre, puisque la grille du tambour remplit la fonction d'un filtre, de sorte que l'air soufflé par ladite turbine n'est pas chargé de feuilles et brindilles émiettées.

A l'intérieur du tambour à claire-voie 2, est logé, fixement, à proximité de la grille cylindrique 3 de ce dernier, un déflecteur 5 qui peut être constitué par une pièce en plastique rotomoulée ou autre matériau dont la forme est déterminée pour optimiser le rendement du système d'aspiration. Ce déflecteur 5 comporte une paroi latérale 5a et un fond 5b par l'intermédiaire duquel il est relié rigidement à un élément horizontal inférieur 6a du bâti 6 de la tête d'effeuillage, par exemple au moyen d'un organe de fixation 7 traversant une ouverture axiale ménagée dans le fond 8 du tambour rotatif et servant de pivot à ce dernier. Ce mode de fixation a notamment pour avantage de ne pas obturer l'ouïe d'aspiration de la turbine 4 disposée au-dessus dudit déflecteur.

Une ouverture 9 est ménagée dans la paroi latérale 5a de ce dernier. Cette ouverture s'étend, par exemple, sur une hauteur sensiblement égale à la hauteur de la grille 3 du tambour rotatif et présente une largeur de l'ordre de 220 mm à 260 mm correspondant à un arc de l'ordre de 70° à 80°.

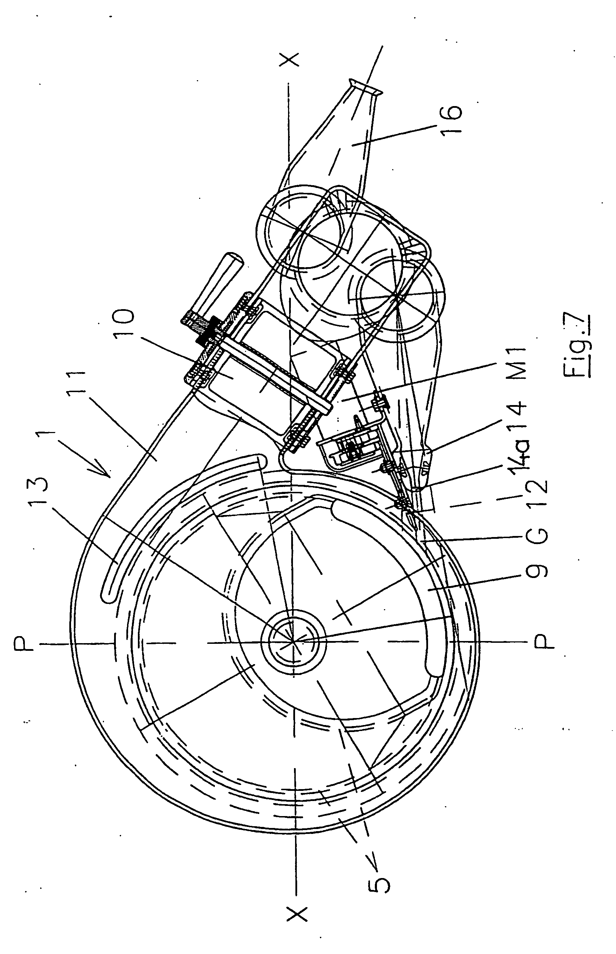

La majeure partie de l'aire correspondant à la largeur de l'ouverture 9 est disposée en arrière d'un plan diamétral P-P du tambour à claire-voie rotatif 2 perpendiculaire à l'axe de déplacement X-X de la tête d'effeuillage 1, en cours de travail (figure 7).

L'ouverture 9 du déflecteur 5 est disposée à proximité de la grille cylindrique 3 du tambour rotatif 2, de sorte que ledit déflecteur assure, d'une part, l'étanchéité sur une grande partie du pourtour du tambour ajouré, et, d'autre part, il canalise, à l'intérieur dudit tambour, l'air aspiré par l'ouverture 9. On comprend que l'air aspiré par la turbine 4 se trouve canalisé sous forme d'un flux aspirant traversant une portion changeante de ladite grille cylindrique tournante, l'emplacement et les dimensions de cette portion de grille correspondant à ceux de ladite ouverture.

L'ouverture 9 et la portion de grille qui se trouve devant celle-ci, constituent ainsi une bouche d'aspiration disposée dans une zone du tambour destinée à se trouver en contact avec le matelas végétal du rang de vigne.

Suivant ce principe d'aspiration des feuilles par contact direct avec le matelas végétal, il apparaît que le flux de dépression nécessaire pour happer et plaquer les feuilles contre la grille de la cage peut être relativement faible par rapport aux effeuilleuses classiques qui se tiennent relativement éloignées du matelas végétal, ce qui nécessite une dépression très importante, donc beaucoup de puissance pour aspirer les feuilles dans le système de sectionnement.

Dans le principe de la cage rotative à contact, l'intensité de l'effeuillage est proportionnelle à la dépression générée par l'aspirateur. Le volume de feuilles supprimées pourra donc être réglé en fonction de la force d'aspiration du ventilateur. Cette régulation de la force d'aspiration peut être réalisée soit en faisant varier la vitesse de rotation de la turbine, ou en freinant la sortie d'air de la turbine, par une trappe ou volet réglable 10 disposée sur la tubulure d'échappement 11 en sortie de volute.

Les feuilles sont collées par aspiration sur la grille cylindrique du tambour rotatif. Sous l'effet conjugué de succion pneumatique et de rotation mécanique du tambour, les feuilles sont tirées du matelas végétal. Les feuilles, plus légères que les grappes, offrent également une plus grande surface d'aspiration, de sorte qu'une dépression relativement faible, par différence de densité, suffit pour "coller" les feuilles contre la grille du tambour rotatif, sans pour autant attirer les grappes.

Un moyen de coupe est installé à proximité de la bouche d'aspiration 9 du tambour rotatif, parallèlement ou sensiblement parallèlement à l'axe de rotation de ce dernier.

De façon très avantageuse, ce moyen de coupe est disposé en arrière (en considérant le sens de progression de la machine) d'un plan diamétral P-P du tambour orienté perpendiculairement à l'axe d'avancement X-X de la tête d'effeuillage 1 de l'effeuilleuse, en cours de travail, ou, autrement dit, en arrière de la tangente T issue d'un rayon du tambour perpendiculaire au rang de vigne. Il s'étend, de préférence, sur toute la hauteur de la portion de paroi latérale ajourée traversée par le flux aspirant.

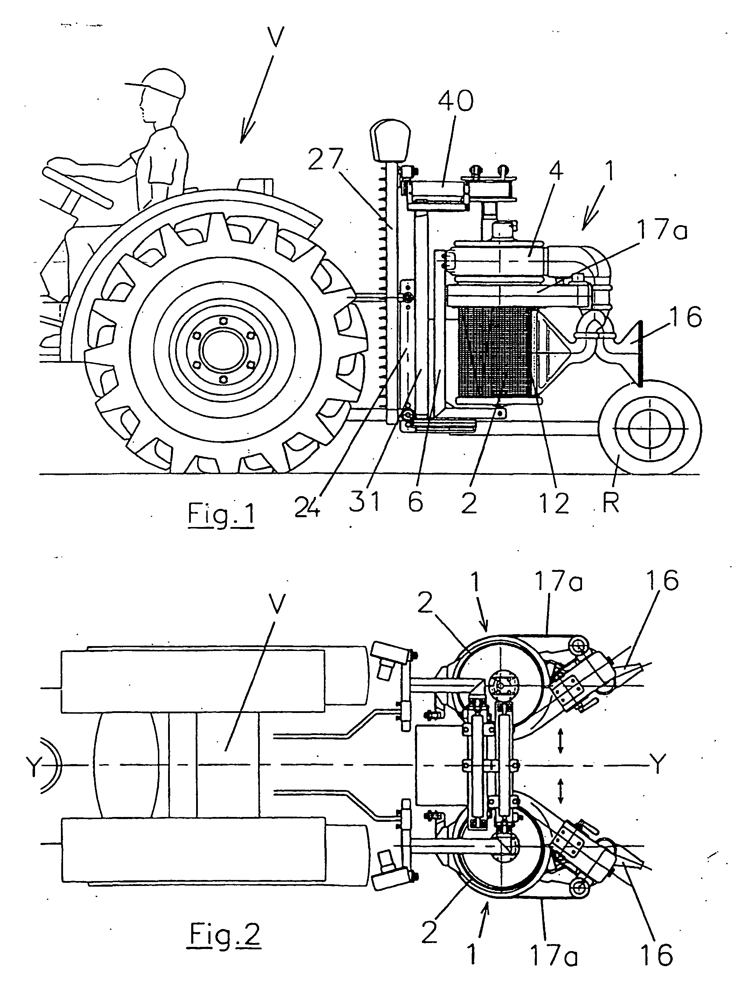

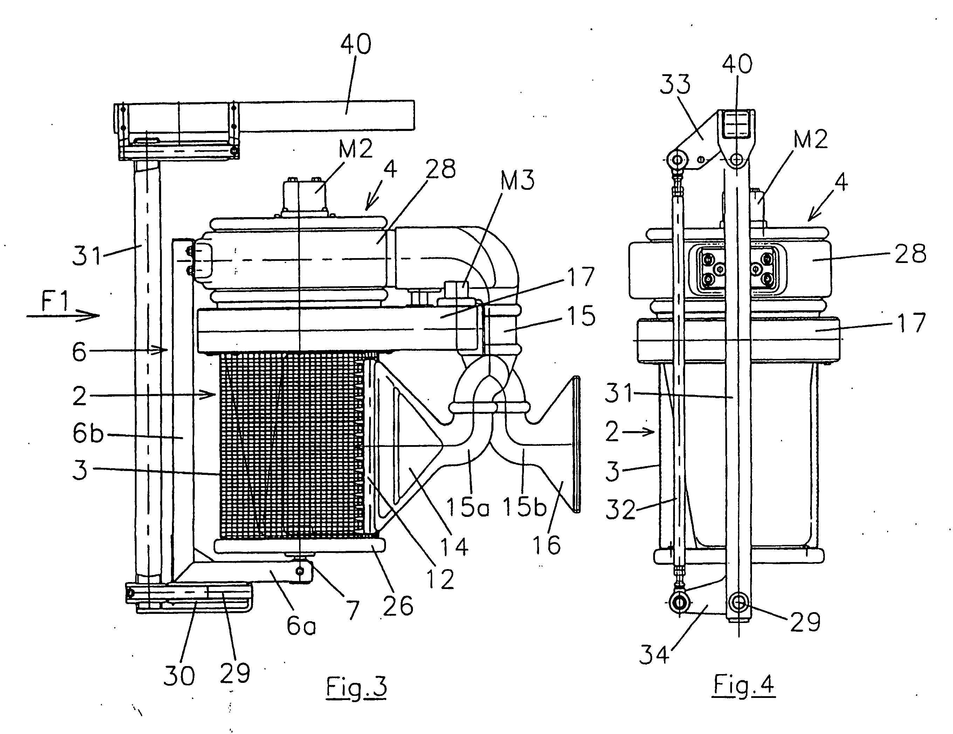

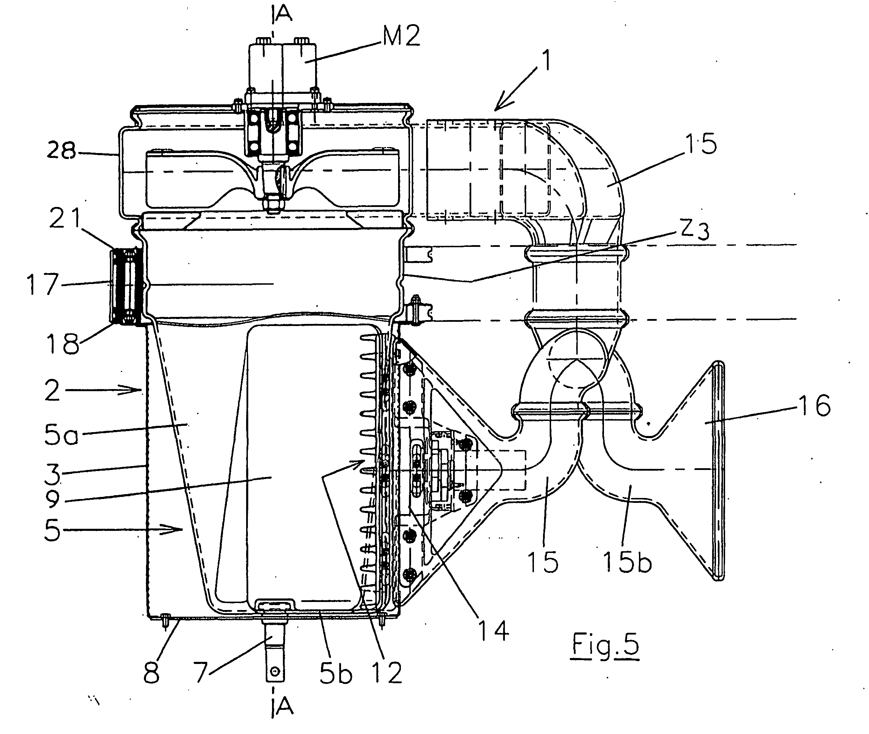

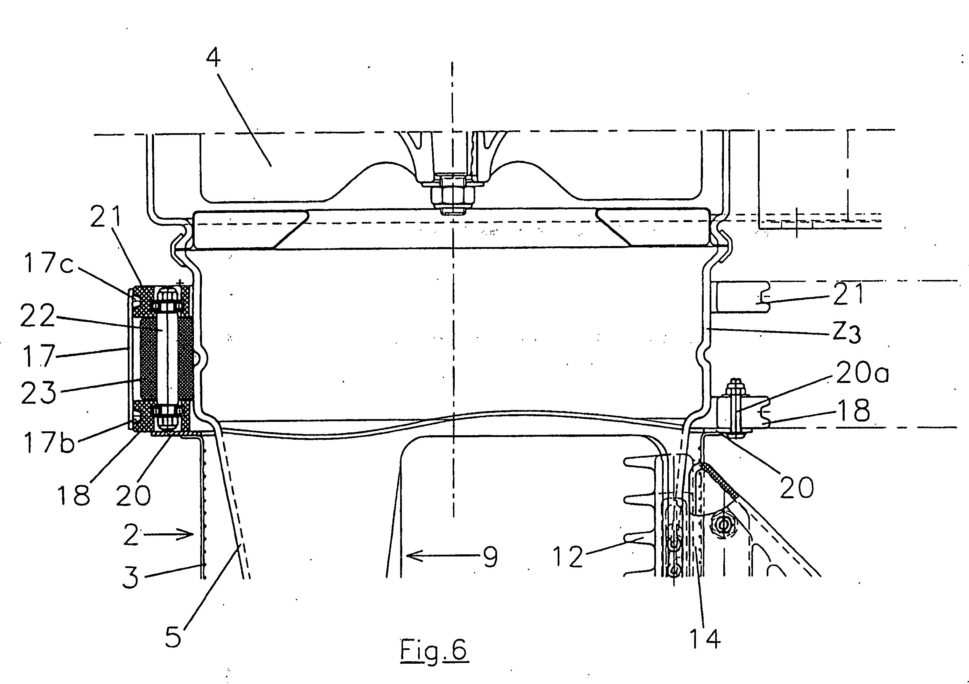

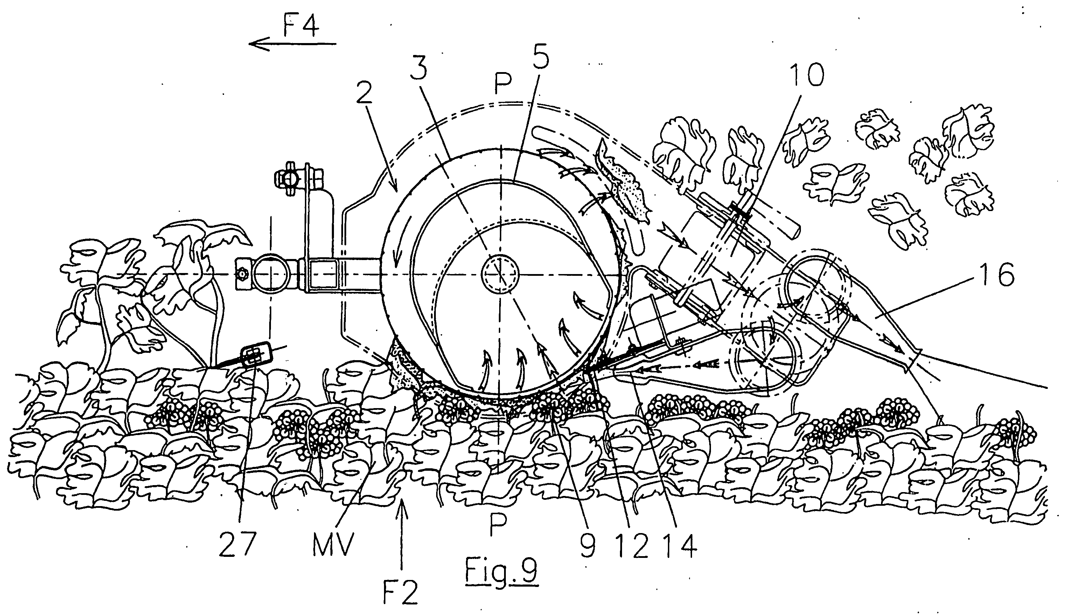

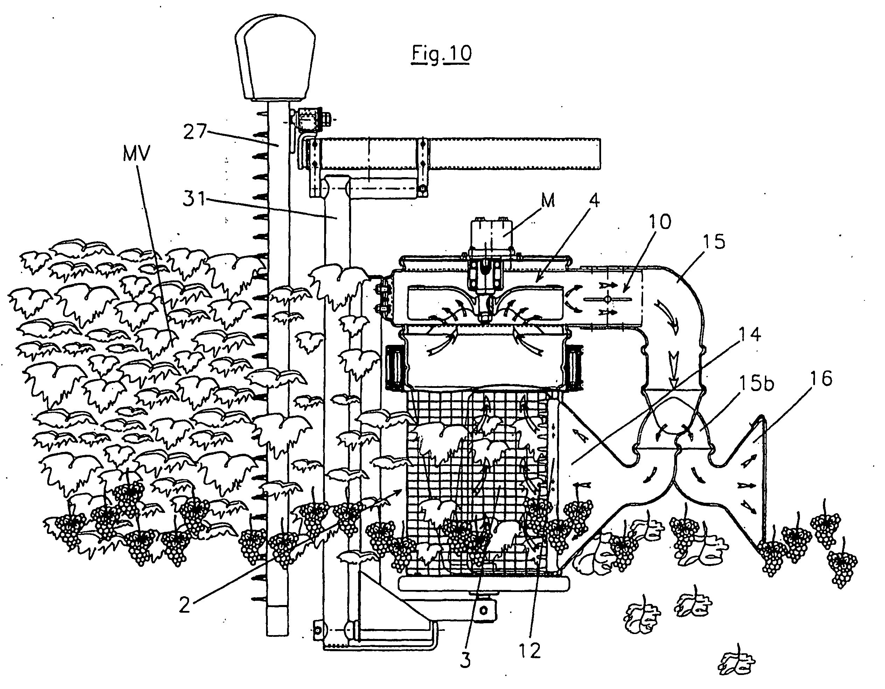

Le moyen de coupe peut être constitué par une barre de coupe alternative 12 (mode d'exécution selon les figures 1 à 11) actionnée par un moteur hydraulique M1 accouplé à un système de transmission à excentrique connu en soi, et dont les lames, disposées en léger retrait par rapport à une génératrice G de la grille cylindrique 3 du tambour rotatif 2, sectionnent les queues des feuilles plaquées sur celle-ci.

On souligne que la qualité de coupe des barres comportant un système de lames et de contre-lames est constante et insensible aux phénomènes d'encrassement causés par la sève, ce qui n'est pas le cas des systèmes rotatifs à grande vitesse qui, en plus des problèmes de qualité de coupe (éclatement des feuilles, sarments pelés, ...), créent des problèmes de sécurité dus aux vibrations des éléments mécaniques et aux projections des bris de coupe.

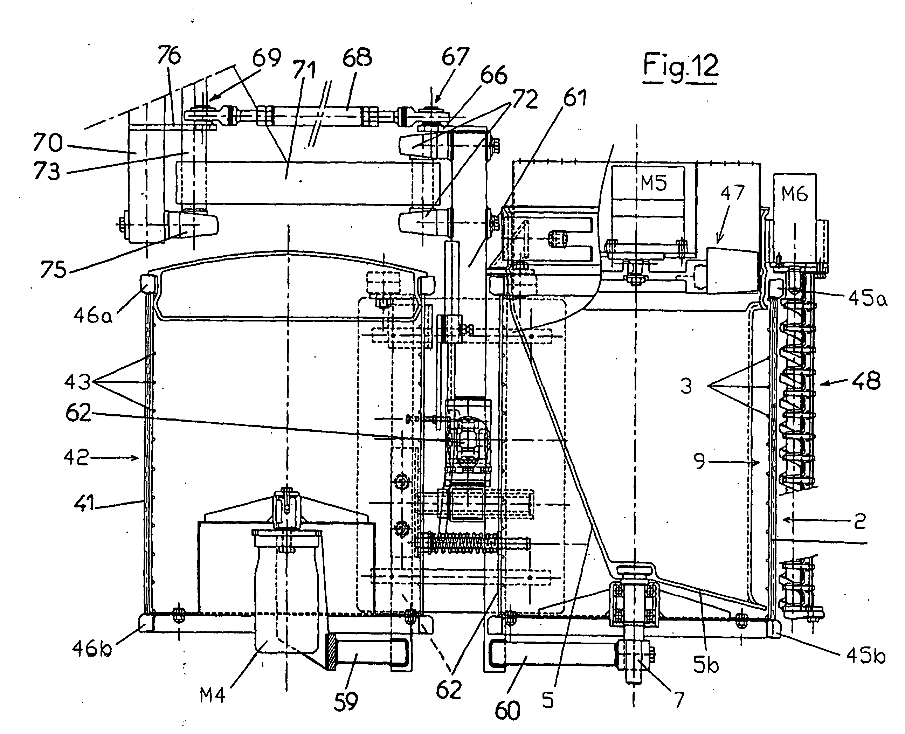

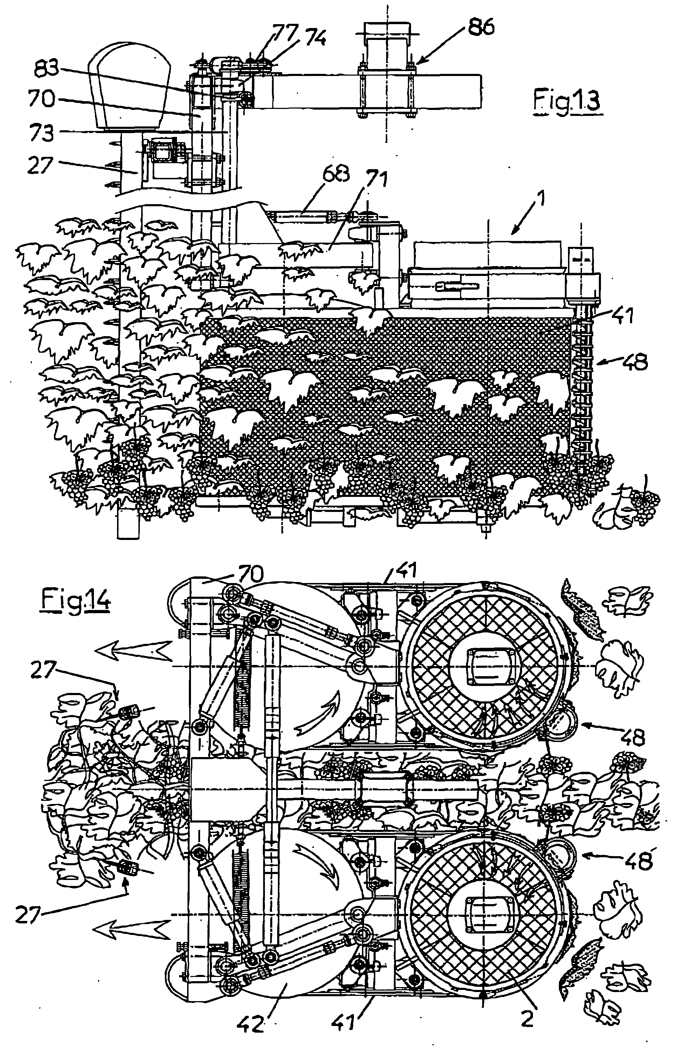

Le moyen de coupe pourrait également être constitué par une scie à ruban à petite denture et tournant à grande vitesse, ou par des couteaux rotatifs superposés, ou par une barre de coupe circulaire (lames mobiles fixées sur une courroie sans fin), ou par une barre de coupe hélicoïdale (figures 12 à 17).

La barre de coupe 12 est orientée tangentiellement au tambour rotatif et elle peut être supportée par des moyens connus en soi permettant le réglage de son positionnement tangentiel par rapport audit tambour et/ou un réglage de sa distance par rapport à ce dernier.

De préférence, la barre de coupe est disposée et orientée de sorte :
- que les extrémités de ses lames soient placées à environ 10 mm de la grille cylindrique du tambour ;
- que les extrémités de ses lames se trouvent en retrait latéral par rapport à la génératrice du tambour en contact avec le matelas végétal, en cours de travail, sur une distance de l'ordre de 50 mm ;
- à former un angle de l'ordre de 20° par rapport à l'axe du rang de vigne, en cours de travail.

Comme indiqué précédemment, les feuilles, après sectionnement de leur pétiole, par le moyen de coupe 12, sont entraînées hors du champ d'aspiration par suite de la rotation du tambour 2, et tombent sur le sol par effet de gravité.

Selon le mode d'exécution illustré aux figures 1 à 11, la tête d'effeuillage ou chaque tête d'effeuillage de l'effeuilleuse comprend une chenille de guidage constituée par une bande sans fin plate 17 présentant, par exemple, une largeur de 100 mm. Elle s'enroule, par exemple, d'une part, sur une grande poulie à gorge 18 rigidement solidaire de la partie supérieure du tambour à claire-voie rotatif 2 et, d'autre part, sur au moins un rouleau à axe vertical 19. Cette bande sans fin plate est disposée de sorte à présenter, sur le côté de la tête d'effeuillage appelé à se trouver face au matelas végétal, en cours de travail, une portion rectiligne 17a, parallèle ou sensiblement parallèle à l'axe d'avancement de l'effeuilleuse. Cette portion rectiligne constitue ainsi un patin d'appui et de guidage qui avance en étant constamment appliqué contre le matelas végétal constitué par le feuillage du rang de vigne, malgré les inégalités de surface que présente ledit matelas végétal.

La poulie à gorge 18 est fixée sur une couronne 20 rigidement solidaire de l'extrémité supérieure du tambour 2, par exemple au moyen de boulons 20a, répartis sur le pourtour desdites poulie et couronne.

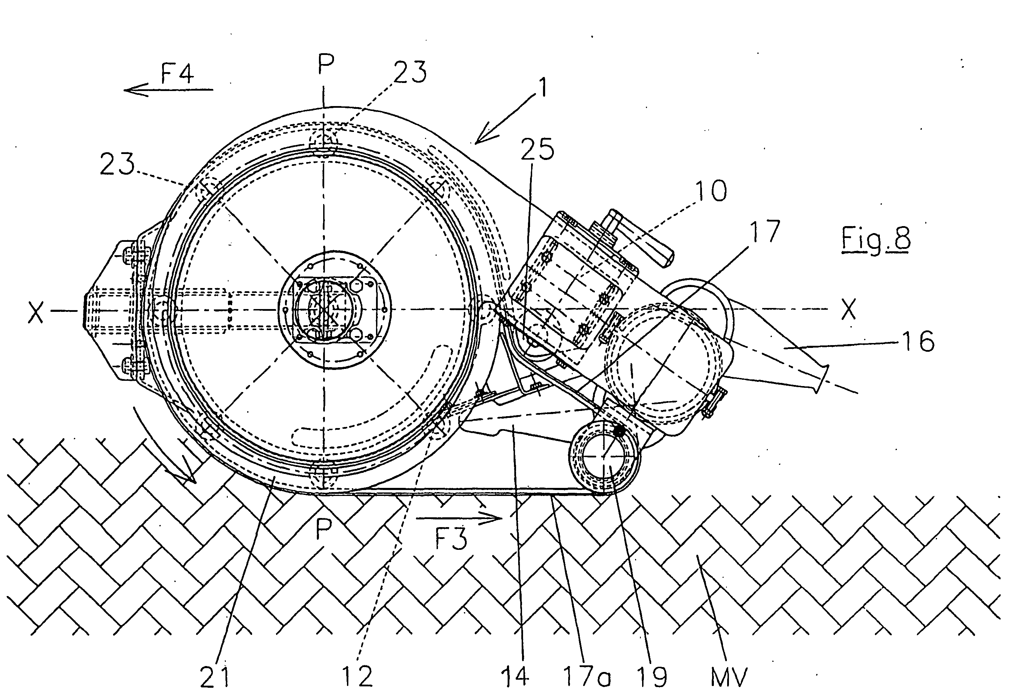

Au-dessus de la poulie à gorge 18, est disposée une deuxième grande poulie à gorge 21 reliée à la poulie 18 par l'intermédiaire des axes verticaux 22 de rouleaux de guidage 23, par exemple espacés de 45° (figure 8).

La face interne de la bande sans fin 17 est munie de deux courroies trapézoïdales parallèles espacées 17b, 17c respectivement logées dans les gorges des poulies inférieure 18 et supérieure 21.

On observe que les poulies 18 et 21 sur lesquelles s'enroule la bande sans fin plate ont un diamètre (par exemple de l'ordre de 500 mm) supérieur au diamètre du tambour à claire-voie 2.

On comprend que les poulies 18 et 21, les axes 22 et les rouleaux 23 forment un ensemble solidaire en rotation du tambour à claire-voie 2 et tournant autour de la portion supérieure cylindrique Z3 du déflecteur fixe 5, lesdits rouleaux 23 constituant les organes de roulement et de guidage de l'ensemble tournant.

L'entraînement de cet ensemble en rotation est assuré par la bande sans fin 17 elle-même entraînée par le rouleau moteur 19. Un moteur hydraulique M3 noyé dans le rouleau 19 assure l'entraînement en rotation de ce dernier. Un rouleau tendeur 25 peut être disposé en arrière du tambour rotatif, pour permettre un réglage de la tension de la bande plate ou chenille 17.

La chenille 17 se déplace à une vitesse inversement proportionnelle à la vitesse de déplacement de l'effeuilleuse, en cours de travail. Dans sa portion destinée à prendre appui sur le matelas végétal MV, la chenille se déplace dans une direction (Flèche F3) opposée au sens de déplacement (flèche F4) de l'effeuilleuse, d'où une vitesse relative nulle entre le matelas végétal et la chenille (figure 8).

Une roue 26 de diamètre supérieur au diamètre du tambour à claire-voie 2 est disposée à la partie inférieure dudit tambour, cette roue remplissant la fonction de pare-choc protégeant ce dernier et la vigne.

De manière avantageuse, une barre de coupe 27 ou autre moyen de coupe connu en soi, tel qu'une barre de coupe alternative, est disposée verticalement devant le tambour rotatif de la tête d'effeuillage ou de chaque tête d'effeuillage, de l'effeuilleuse. Cette barre de coupe 27 portée par un élément 24 du châssis de l'effeuilleuse, est disposée à une distance suffisante du tambour à claire-voie rotatif 2, de sorte à ce que les bris de coupe ne perturbent pas le travail de l'effeuilleuse. Des moyens de réglage manuel peuvent être prévus pour avoir la possibilité d'ajuster la profondeur de coupe, afin de parfaire la position de la barre de coupe 27 par rapport à la zone fructifère.

La tête d'effeuillage ou chaque tête d'effeuillage 1 de l'effeuilleuse est portée par un bâti 6, par exemple en forme de L constitué d'un élément inférieur horizontal 6a supportant l'axe 7 du tambour rotatif et d'un montant 6b dont la partie supérieure est fixée rigidement, par exemple au moyen de vis, au carter 28 de la turbine d'aspiration 4.

L'effeuilleuse comporte encore :
- d'une part, des moyens permettant d'écarter ou de rapprocher sa tête d'effeuillage 1 ou chacune de ses têtes d'effeuillage 1 de son axe d'avancement Y-Y, et/ou,
- d'autre part, des moyens permettant de régler la position du tambour d'effeuillage par rapport à la verticale.

Le bâti 6 est monté, par l'intermédiaire de son élément horizontal inférieur 6a et d'un manchon 30 solidaire dudit élément, sur l'un des axes horizontaux inférieurs 29 d'une structure porteuse avantageusement constituée par un balancier à parallélogramme déformable vertical. Ce balancier comprend une poutre 31 de hauteur supérieure à celle de la tête d'effeuillage, un tirant de type ridoir 32, un organe de suspension 33 conformé pour constituer le petit côté fixe du parallélogramme déformable, et une biellette de positionnement 34 également solidaire du manchon et constituant l'autre petit côté mobile dudit parallélogramme. Ce dispositif autorise un mouvement pendulaire latéral, d'amplitude limitée, par exemple de l'ordre de +/- 300 mm, de la tête d'effeuillage.

Le tirant 32 de ce balancier à parallélogramme déformable dispose, de préférence, de moyens de réglage d'entr'axe, connus en soi, permettant de modifier sa longueur et, par conséquent, la position de la tête d'effeuillage à laquelle il est possible de donner une inclinaison dans le plan vertical de +/- 20°.

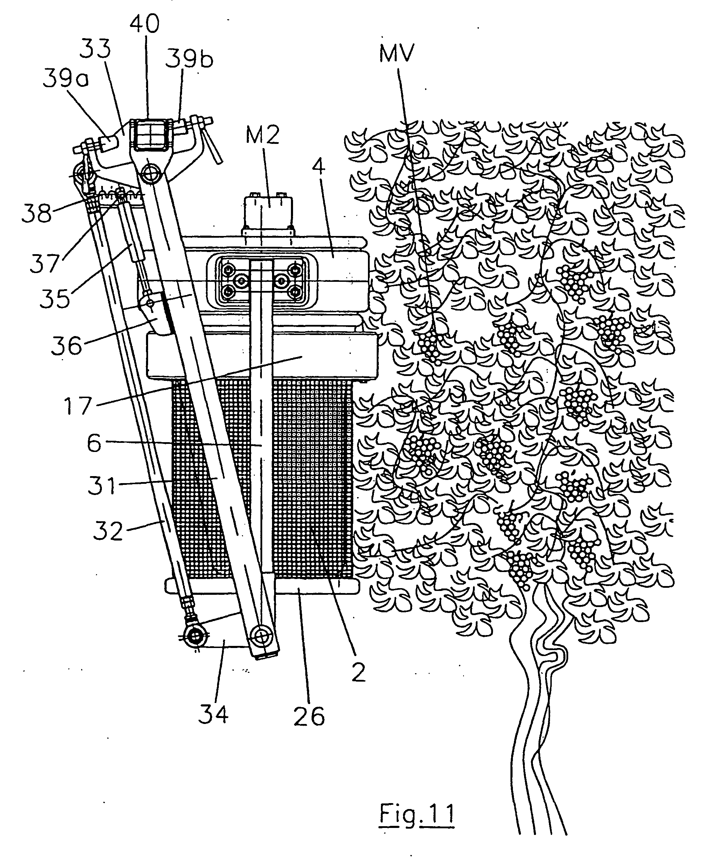

De manière avantageuse, la structure porteuse de la tête d'effeuillage ou de chaque tête d'effeuillage comporte un dispositif d'appui élastique permettant de maintenir le tambour 2 en souplesse et en pression constante sur le matelas végétal MV. Ce dispositif est, par exemple, constitué par un ressort à gaz 35, fixé, par l'intermédiaire de ses extrémités opposées et d'articulations, d'une part, à une patte d'attache 36 solidaire du montant 31, du parallélogramme déformable, et, d'autre part, à une pièce solidaire de la partie supérieure du châssis de l'effeuilleuse, cette pièce étant, par exemple, constituée par le petit côté fixe 33 dudit parallélogramme déformable (figure 11).

De préférence, des moyens sont prévus pour permettre de régler, manuellement, la pression de ce ressort à gaz ou autre dispositif similaire.

L'extrémité supérieure du ressort 35 est, par exemple, munie d'un axe 37 s'engageant dans une crémaillère 38 rigidement solidaire de la partie supérieure du châssis de l'effeuilleuse.

Deux butées 39a, 39b disposées de part et d'autre de l'extrémité supérieure du montant 31 du balancier à parallélogramme, permettent de régler les positions ainsi que la course transversale de la tête d'effeuillage, ces butées venant en appui contre un élément de la partie supérieure du châssis de l'effeuilleuse (figure 11).

Le balancier à parallélogramme déformable 31-32-33-34 supportant la tête d'effeuillage est suspendu à une poutre supérieure horizontale 40 du châssis de l'effeuilleuse.

L'effeuilleuse selon l'invention peut être de type "porté" et son châssis agencé pour pouvoir être fixé à l'avant ou à l'arrière d'un véhicule V par exemple constitué par un tracteur agricole, ou de type traîné et muni de roues R et agencé pour pouvoir être attelé à l'arrière d'un tracteur, ou installée sur divers véhicules automoteurs. Elle peut comporter :
- une seule tête d'effeuillage disposée latéralement par rapport à l'axe d'avancement du véhicule, pour permettre l'effeuillage d'un seul côté à la fois d'un rang de vigne ; ou,
- deux têtes d'effeuillage disposées de part et d'autre de l'axe d'avancement d'un véhicule du genre "interligne", ces têtes d'effeuillage pouvant être mises en fonctionnement :
   - soit chacune à leur tour, lors des trajets aller et retour de l'effeuilleuse, si l'on souhaite effeuiller un seul côté des rangs de vigne ;
   - soit simultanément si l'on désire effectuer un effeuillage des côtés placés en vis à vis de deux rangs de vigne voisins ; ou,
- deux têtes d'effeuillage disposées de part et d'autre de l'axe d'avancement d'un véhicule du type "enjambeur", ces têtes d'effeuillage pouvant être mise en fonctionnement, comme indiqué précédemment :
   - soit chacune à tour de rôle lors des trajets aller et retour de l'effeuilleuse, pour procéder à l'effeuillage d'un seul côté des rangs de vigne ;
   - soit simultanément pour effectuer un effeuillage des deux côtés du rang de vigne chevauché par ladite effeuilleuse.

Les figures 12 à 17 illustrent un autre exemple de réalisation du bâti ou châssis de l'effeuilleuse, le mode d'exécution particulier de cette dernière n'étant pas revendiqué. Selon ce mode d'exécution, la tête d'effeuillage ou chaque tête d'effeuillage 1 de l'effeuilleuse comprend une chenille de guidage 41 constituée par un tapis sans fin à claire-voie s'enroulant, d'une part, sur le tambour aspirant tournant 2, et, d'autre part, sur un deuxième tambour 42 disposé en avant dudit tambour aspirant, ledit tapis sans fin ajouré 41 ayant sur le côté de la tête d'effeuillage appelé à se trouver face au matelas végétal, en cours de travail, une trajectoire ou portion rectiligne 41a, parallèle à l'axe d'avancement de l'effeuilleuse, de sorte à présenter une surface d'appui plane. D'autre part, le moyen de coupe de la tête d'effeuillage ou de chaque tête d'effeuillage 1, est constitué par une barre de coupe hélicoïdale 48.

Comme indiqué précédemment, la tête d'effeuillage ou chaque tête d'effeuillage de l'effeuilleuse est portée par un bâti agencé pour pouvoir être installé de manière amovible sur un tracteur agricole ou autre engin porteur.

On décrit ci-après plus spécialement les moyens permettant d'adapter la position de la tête d'effeuillage 1 ou de chaque tête d'effeuillage 1, à la hauteur et à la surface du matelas végétal.

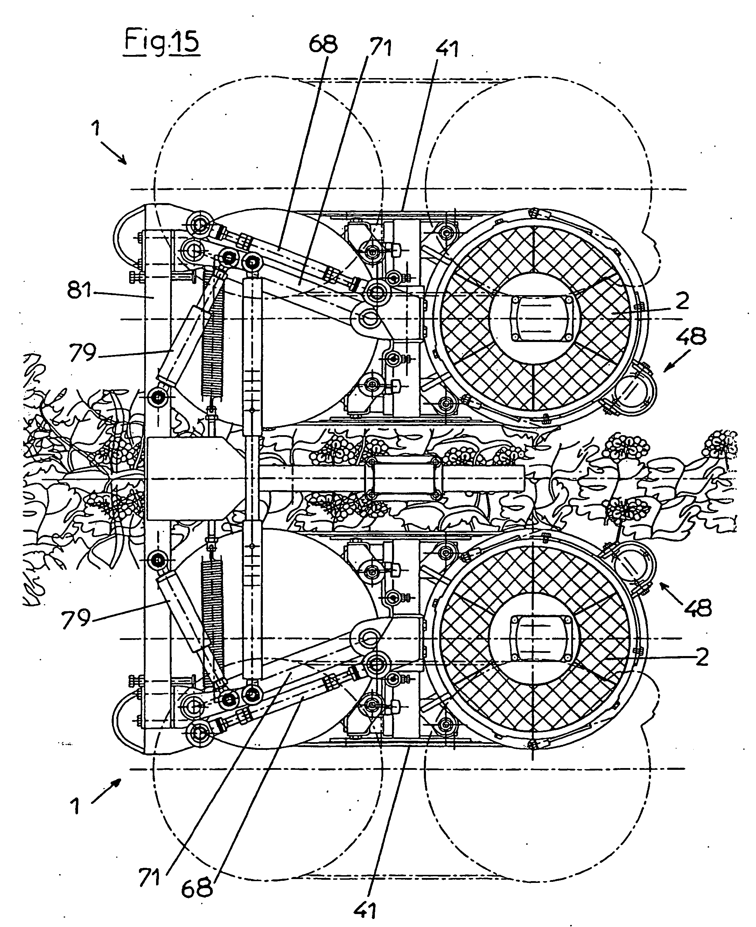

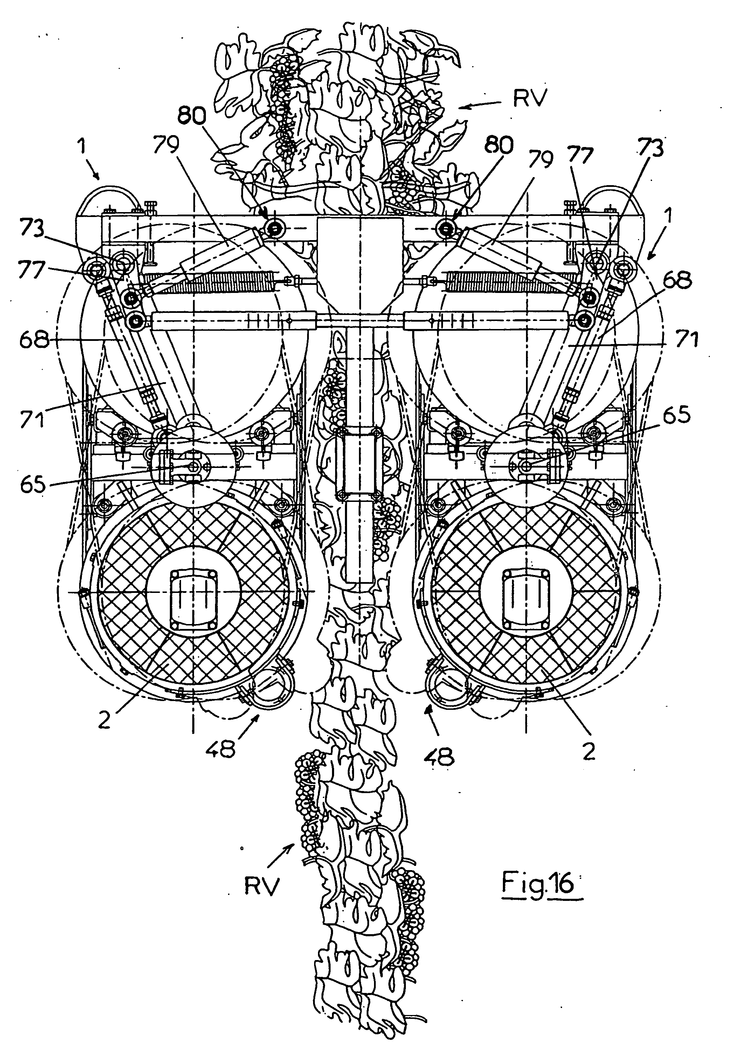

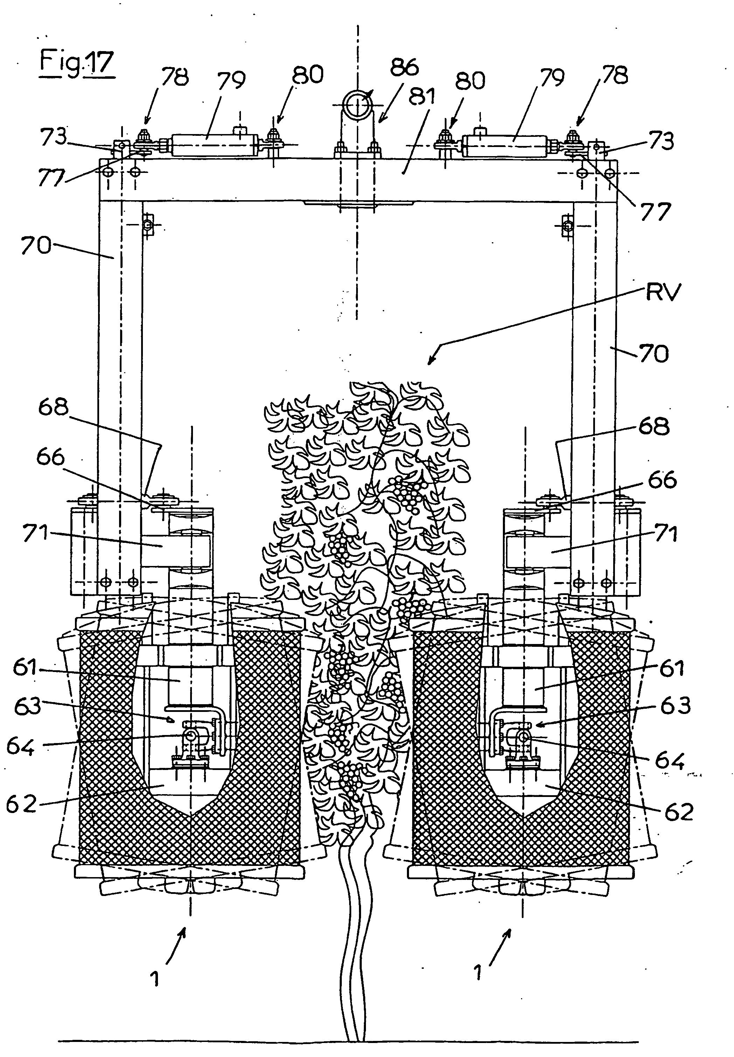

Selon le mode d'exécution représenté, à titre d'exemple, aux figures 12 à 17, la tête d'effeuillage ou chaque tête d'effeuillage est montée sur ce bâti avec :
- une possibilité de mouvement latéral dans une direction perpendiculaire au sens d'avancement de l'effeuilleuse en cours de travail, afin de la maintenir appliquée contre le matelas végétal MV (figure 15) ;
- une aptitude de pivotement d'amplitude limitée autour d'un axe vertical, afin de permettre de suivre le profil du matelas végétal MV dans le sens longitudinal (figure 16) ;
- une faculté de basculement d'amplitude limitée autour d'un axe horizontal, pour suivre le profil du matelas végétal MV par rapport à la verticalité de celui-ci (figure 17).

Chaque tête d'effeuillage 1 est supportée par une console 59 (soutenant le rouleau 42) et par une console 60 (soutenant le rouleau 2), constituant la base d'un mât comprenant une partie supérieure 61 et une partie inférieure 62 assemblées par un joint de cardan 63. Ce cardan permet un pivotement de la tête d'effeuillage autour d'un axe horizontal 64 (figure 17) et autour d'un axe vertical 65 (figure 16).

L'extrémité supérieure du mât 61-62 est solidaire d'une platine horizontale 66 sur laquelle est fixée au moyen d'une articulation 67, l'une des extrémités d'une biellette réglable 68 dont l'autre extrémité est articulée, par l'intermédiaire d'une articulation 69, sur une console 76 solidaire de la partie inférieure d'un montant 70 du châssis porteur de l'ensemble d'effeuillage.

D'autre part, un robuste bras horizontal 71, orienté parallèlement à la biellette 68, est articulé, par l'intermédiaire de l'une de ses extrémités et de paliers 72, sur la partie supérieure 61 du mât 61-62. L'extrémité opposée de ce bras 71 est rigidement solidaire d'une barre verticale de commande 73 montée avec une aptitude de pivotement d'amplitude limitée, par l'intermédiaire de paliers haut 74 et bas 75 supportés par le montant 70.

La biellette réglable 68 et le bras 71 constituent les deux grands côtés d'un parallélogramme déformable horizontal portant la tête d'effeuillage.

La partie supérieure de la barre de commande 73 est solidaire d'une biellette 77 reliée, par l'intermédiaire d'une articulation 78, à l'une des extrémités d'un vérin amortisseur 79 dont l'autre extrémité est reliée au moyen d'une articulation 80 sur une poutre horizontale 81 reliant les deux montants 70 du châssis porteur de l'effeuilleuse.

Les vérins amortisseurs 79 permettent, par l'intermédiaire de la biellette 77, de la barre 73, du parallélogramme articulé (comprenant la bielle 68 et le bras 71) et du mât 61-62, l'écartement des têtes d'effeuillage 1, à l'entrée des rangs de vigne RV, en fonction de l'épaisseur du matelas végétal.

Lorsque les vérins amortisseurs 79 ne sont pas actionnés, ils ont pour fonction d'amortir le mouvement des têtes d'effeuillages qui sont rappelées en direction de l'axe d'avancement Y-Y de l'effeuilleuse, par des ressorts 82 agissant en traction et reliant, par l'intermédiaire de leurs extrémités opposées, d'une part, une biellette pivotante 83 solidaire de la barre 73 et orientée parallèlement à la biellette 77, et, d'autre part, un élément central 84 du châssis porteur.

Une bielle réglable 85 est fixée, par l'intermédiaire de ses extrémités opposées et d'articulations 86, aux extrémités des biellettes d'ouverture 77, cette bielle permettant de définir et de maintenir un écartement minimum entre les deux modules d'effeuillage.

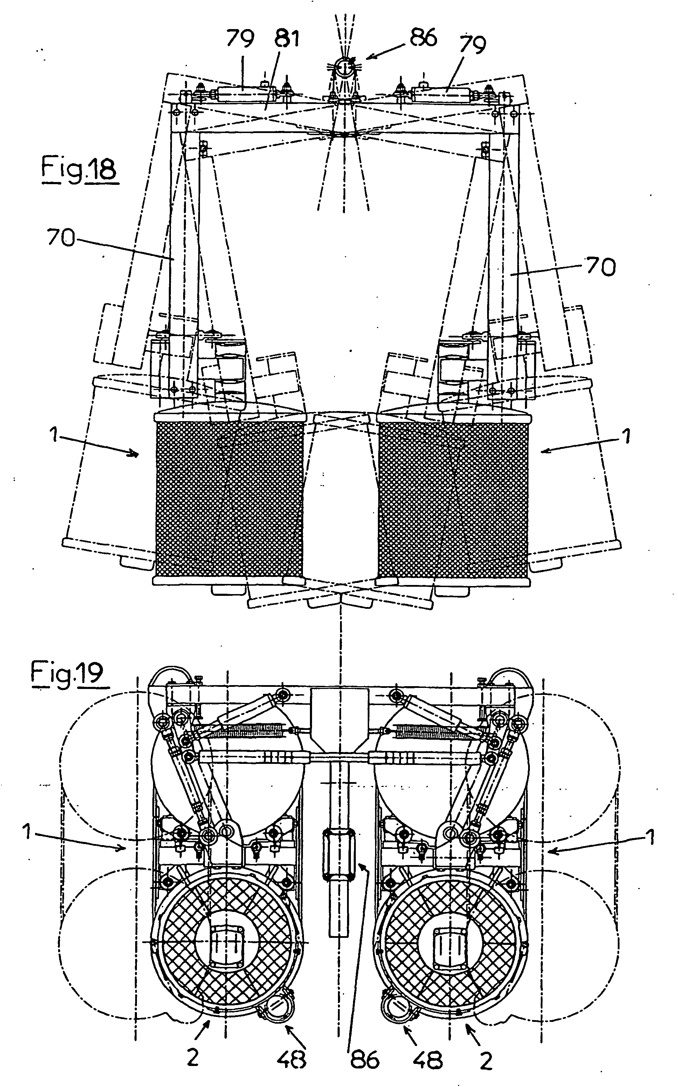

Le châssis porteur de l'effeuilleuse peut être monté, de manière amovible, par l'intermédiaire d'un moyen de montage 87, équipant un élément supérieur central de son ossature, sur un bâti de montage installé sur un tracteur agricole, avec une aptitude d'oscillation autour d'un axe parallèle à l'axe d'avancement Y-Y de l'effeuilleuse, de sorte à rester dans la position souhaitable quelle que soit la conformation du terrain sur lequel roule le tracteur (figure 18).

De manière avantageuse, les têtes d'effeuillage (1) sont disposées, en cours de travail, de part et d'autre de l'axe d'avancement Y-Y de l'effeuilleuse, de manière à pouvoir s'appuyer, de manière équilibrée, sur les deux côtés d'un rang de vigne RV qui se trouve ainsi préservé des effets d'une force tendant à le repousser sur un côté, ces têtes d'effeuillage pouvant être mises en fonctionnement :
- soit chacune à leur tour, lors des trajets aller et retour de l'effeuilleuse, si l'on souhaite effeuiller une seule face du rang de vigne ;
- soit simultanément si l'on désire effectuer un effeuillage sur chaque face du rang de vigne.

## Revendications

1. Effeuilleuse plus spécialement destinée à l'effeuillage de la vigne, comprenant au moins une tête d'effeuillage (1) comportant un tambour rotatif à claire-voie (2), un moyen d'aspiration (4) permettant de générer un flux d'air aspirant traversant la paroi latérale cylindrique ajourée (3) dudit tambour, et un moyen (5, 9) pour canaliser ce flux d'air à travers une portion changeante de ladite paroi latérale, **caractérisée en ce qu'**un moyen de coupe (12, 48) est installé à proximité de ladite portion de paroi latérale (3) du tambour aspirant tournant (2) et orienté parallèlement ou sensiblement parallèlement à l'axe de rotation (A-A) de ce dernier.

2. Effeuilleuse suivant la revendication 1, dont le moyen permettant de canaliser le flux d'air aspiré à travers une portion changeante de la paroi latérale cylindrique (3) ajourée du tambour aspirant tournant (2) est constitué par un déflecteur (5) installé fixement à l'intérieur dudit tambour, ce déflecteur comportant une paroi latérale (5a) dans laquelle est ménagée une ouverture d'aspiration (9), **caractérisée en ce que** la majeure partie de l'aire correspondant à la largeur de l'ouverture (9) est disposée en arrière d'un plan diamétral (P-P) du tambour à claire-voie rotatif (2) perpendiculaire à l'axe de déplacement (X-X) de la tête d'effeuillage (1), en cours de travail.

3. Effeuilleuse selon l'une des revendications 1 ou 2, **caractérisée en ce que** le moyen de coupe (12) est disposé en arrière d'un plan diamétral (P-P) du tambour tournant orienté perpendiculairement à l'axe d'avancement (X-X) de la tête d'effeuillage (1) de ladite effeuilleuse, en cours de travail.

4. Effeuilleuse suivant l'une quelconque des revendications 1 à 3, **caractérisée en ce que** le moyen de coupe (12, 48) s'étend sur toute la hauteur de la portion de paroi latérale ajourée (3) traversée par le flux aspirant.

5. Effeuilleuse suivant l'une quelconque des revendications 1 à 4, **caractérisée en ce que** la barre de coupe (12, 48) est montée sur un élément fixe du bâti de l'effeuilleuse, par l'intermédiaire de moyens de fixation connus en soi permettant un réglage de la distance de ladite barre de coupe par rapport au tambour d'aspiration (2) et/ou un réglage de sa position par rapport à la périphérie de ce dernier.

6. Effeuilleuse selon l'une quelconque des revendications 1 à 5, **caractérisée en ce qu'**elle comporte un moyen de coupe (27) disposé verticalement devant la tête d'effeuillage ou devant chaque tête d'effeuillage et à distance de celle-ci, ce moyen de coupe étant, par exemple, constitué par une barre de coupe alternative.

7. Effeuilleuse selon l'une quelconque des revendications 1 à 6, **caractérisée en ce qu'**elle comporte des moyens (31, 32, 33, 34) permettant d'écarter ou de rapprocher sa tête d'effeuillage (1) ou chacune de ses têtes d'effeuillage (1), de son axe d'avancement (Y-Y).

8. Effeuilleuse suivant l'une quelconque des revendications 1 à 7, **caractérisée en ce qu'**elle comporte des moyens (29, 30, 31, 32, 33, 34) permettant de régler la position du tambour d'effeuillage (2) par rapport à la verticale.

9. Effeuilleuse selon l'une quelconque des revendications 1 à 8, **caractérisée en ce que** la structure porteuse (31-32-33-34) de la tête d'effeuillage (1) ou de chaque tête d'effeuillage (1) comporte un dispositif d'appui élastique (35), de préférence réglable, permettant de corriger les écarts de conduite, et de maintenir ladite tête d'effeuillage en souplesse et en pression constante contre le matelas végétal (MV).

10. Effeuilleuse suivant l'une quelconque des revendications 1 à 9, **caractérisée en ce que** la tête d'effeuillage ou chaque tête d'effeuillage (1) est montée avec une aptitude de pivotement autour d'un axe vertical (65), afin de permettre de suivre le profil du matelas végétal (MV) dans le sens longitudinal.

11. Effeuilleuse selon l'une quelconque des revendications 1 à 10, **caractérisée en ce que** la tête d'effeuillage ou chaque tête d'effeuillage (1) est montée avec une aptitude de basculement autour d'un axe horizontal (64) parallèle au sens d'avancement de ladite tête d'effeuillage en cours de travail, pour suivre le profil du matelas végétal (MV) par rapport à la verticalité de ce dernier.

12. Effeuilleuse selon l'une quelconque des revendications 7 à 11, **caractérisée en ce que** le mât (61-62) portant la tête d'effeuillage est suspendu à un parallélogramme déformable horizontal (68, 71) permettant un déplacement latéral de ladite tête d'effeuillage.

13. Effeuilleuse suivant l'une quelconque des revendications 1 à 12, **caractérisée en ce qu'**elle comprend deux têtes d'effeuillage (1) disposées de part et d'autre de l'axe d'avancement (Y-Y) de ladite tête d'effeuillage, de manière à pouvoir s'appuyer sur les deux côtés d'un rang de vigne (RV), ces têtes d'effeuillage pouvant être mises en fonctionnement :
- soit chacune à leur tour, lors des trajets aller et retour de l'effeuilleuse, si l'on souhaite effeuiller une seule face du rang de vigne ;
- soit simultanément si l'on désire effectuer un effeuillage sur chaque face du rang de vigne.

## Patentansprüche

1. Entblätterungsmaschine, insbesondere bestimmt zum Entblättern von Reben, umfassend wenigstens einen Entblätterungskopf (1), der eine Drehtrommel (2) mit Sprossen, ein Ansaugmittel (4), welches das Erzeugen eines Saugluftstroms gestattet, der die zylindrische durchbrochene Seitenwand (3) der Trommel durchquert, und ein Mittel (5, 9), um diesen Luftstrom durch einen wechselnden Abschnitt der Seitenwand zu kanalisieren, **dadurch gekennzeichnet, dass** ein Schneidemittel (12, 48) in der Nähe des Abschnitts der Seitenwand (3) der Saugdrehtrommel (2) installiert und parallel oder im Wesentlichen parallel zur Drehachse (A-A) der Letzteren ausgerichtet ist.

2. Entblätterungsmaschine nach Anspruch 1, deren Mittel, welches gestattet, den Saugluftstrom durch einen wechselnden Abschnitt der zylindrischen durchbrochenen Seitenwand (3) der Saugdrehtrommel (2) zu kanalisieren, von einem Deflektor (5) gebildet ist, der fest im Inneren der Trommel installiert ist, wobei dieser Deflektor eine Seitenwand (5a) aufweist, in der eine Ansaugöffnung (9) ausgespart ist, **dadurch gekennzeichnet, dass** der größte Teil des Bereichs, welcher der Breite der Öffnung (9) entspricht, während der Arbeit hinter einer diametralen Ebene (P-P) der Drehtrommel (2) mit Sprossen senkrecht zur Verschiebungsachse (X-X) des Entblätterungskopfs angeordnet ist.

3. Entblätterungsmaschine nach einem der Ansprüche 1 oder 2, **dadurch gekennzeichnet, dass** das Schneidemittel (12) hinter einer diametralen Ebene (P-P) der Drehtrommel angeordnet ist, die während der Arbeit senkrecht zur Vorschubachse (X-X) des Entblätterungskopfs (1) der Entblätterungsmaschine ausgerichtet ist.

4. Entblätterungsmaschine nach einem der Ansprüche 1 bis 3, **dadurch gekennzeichnet, dass** das Schneidemittel (12, 48) sich über die ganze Höhe des Abschnitts der durchbrochenen Seitenwand (3) erstreckt, die von dem Saugstrom durchquert wird.

5. Entblätterungsmaschine nach einem der Ansprüche 1 bis 4, **dadurch gekennzeichnet, dass** der Schneidbalken (12, 48) auf einem festen Element des Rahmens der Entblätterungsmaschine mittels bekannten Befestigungsmitteln befestigt ist, die eine Regulierung des Abstands des Schneidbalkens (2) in Bezug auf die Saugtrommel (2) und/oder eine Regulierung seiner Position in Bezug auf den Umfang der Letzteren gestatten.

6. Entblätterungsmaschine nach einem der Ansprüche 1 bis 5, **dadurch gekennzeichnet, dass** sie ein Schneidemittel (27) umfasst, das vertikal vor dem Entblätterungskopf oder vor jedem Entblätterungskopf und von diesem beabstandet angeordnet ist, wobei dieses Schneidemittel beispielsweise aus einem alternativen Schneidebalken ausgebildet wird.

7. Entblätterungsmaschine nach einem der Ansprüche 1 bis 6, **dadurch gekennzeichnet, dass** sie Mittel (31, 32, 33, 34) umfasst, die es gestatten, ihren Entblätterungskopf (1) oder jeden ihrer Entblätterungsköpfe (1) von ihrer Vorschubachse (Y-Y) zu entfernen oder daran anzunähern.

8. Entblätterungsmaschine nach einem der Ansprüche 1 bis 7, **dadurch gekennzeichnet, dass** sie Mittel (29, 30, 31, 32, 33, 34) umfasst, die es gestatten, die Position der Entblätterungstrommel (2) in Bezug auf die Vertikale zu regulieren.

9. Entblätterungsmaschine nach einem der Ansprüche 1 bis 7, **dadurch gekennzeichnet, dass** die tragende Struktur (31-32-33-34) des Entblätterungskopfs (1) oder jedes Entblätterungskopfs (1) eine elastische Stützeinrichtung (35) umfasst, die vorzugsweise regulierbar ist und es gestattet, Führungsabweichungen zu korrigieren und den Entblätterungskopf mit Anschmiegsamkeit und mit konstantem Druck gegen das Pflanzenpolster (MV) zu halten.

10. Entblätterungsmaschine nach einem der Ansprüche 1 bis 7, **dadurch gekennzeichnet, dass** der Entblätterungskopf oder jeder Entblätterungskopf (1) um eine vertikale Achse schwenkbar (65) befestigt ist, um es zu gestatten, dem Profil des Pflanzenpolsters (MV) in Längsrichtung zu folgen.

11. Entblätterungsmaschine nach einem der Ansprüche 1 bis 10, **dadurch gekennzeichnet, dass** der Entblätterungskopf oder jeder Entblätterungskopf (1) um eine horizontale Achse kippbar (64) befestigt ist, die während der Arbeit parallel zur Vorschubrichtung des Entblätterungskopfs verläuft, um dem Profil des Pflanzenpolsters (MV) in Bezug auf seine Vertikalität zu folgen.

12. Entblätterungsmaschine nach einem der Ansprüche 1 bis 11, **dadurch gekennzeichnet, dass** der Mast (61-62), der den Entblätterungskopf trägt, an einem verformbaren horizontalen Parallelogramm (66, 71) aufgehängt ist, wodurch eine seitliche Verschiebung des Entblätterungskopfs gestattet wird.

13. Entblätterungsmaschine nach einem der Ansprüche 1 bis 12, **dadurch gekennzeichnet, dass** sie zwei Entblätterungsköpfe (1) umfasst, die zu beiden Seiten der Vorschubachse (Y-Y) des Entblätterungskopfs so angeordnet sind, dass sie sich auf die zwei Seiten einer Rebenreihe (RV) aufstützen können, wobei die Entblätterungsköpfe in Betrieb gesetzt werden können
- entweder jeweils einzeln während des Hin- und Rückwegs der Entblätterungsmaschine, wenn nur eine Seite der Rebenreihe entblättert werden soll;
- oder gleichzeitig, wenn ein Entblättern auf jeder Seite der Rebenreihe gewünscht wird.

## Claims

1. A leaf stripper, more especially intended for vine leaf stripping, comprising at least one leaf stripping head (1) comprising a latticework rotating drum (2), a suction means (4) making it possible to generate a suction air flow passing through the apertured cylindrical side wall (3) of said drum, and a means (5, 9) for channelling that air flow through a changing portion of said side wall, **characterised in that** a cutting means (12, 48) is installed in the proximity of said side wall portion (3) of the rotating suction drum (2) and oriented in parallel or substantially parallel relationship with the axis of rotation (A-A) of the latter.

2. A leaf stripper according to claim 1 wherein the means for channelling the suction air flow through a changing portion of the apertured cylindrical side wall (3) of the rotating suction drum (2) is formed by a deflector (5) fixedly installed in the interior of said drum, said deflector comprising a side wall (5a) in which a suction opening (9) is provided, **characterised in that** the major part of the area corresponding to the width of the opening (9) is disposed rearwardly of a diametral plane (P-P) of the rotating latticework drum (2) which is perpendicular to the axis of displacement (X-X) of the leaf stripping head (1) in the course of operation.

3. A leaf stripper according to one of claims 1 and 2 **characterised in that** the cutting means (12) is disposed rearwardly of a diametral plane (P-P) of the rotating drum which is oriented perpendicularly to the axis of forward movement (X-X) of the leaf stripping head (1) of said leaf stripper in the course of operation.

4. A leaf stripper according to any one of claims 1 to 3 **characterised in that** the cutting means (12, 48) extends over the entire height of the apertured side wall portion (3) through which the suction flow passes.

5. A leaf stripper according to any one of claims 1 to 4 **characterised in that** the cutting bar (12, 48) is mounted on a fixed element of the frame structure of the leaf stripper by way of per se known fixing means permitting regulation of the distance of said cutting bar with respect to the suction drum (2) and/or regulation of its position with respect to the periphery of the latter.

6. A leaf stripper according to any one of claims 1 to 5 **characterised in that** it comprises a cutting means (27) disposed vertically in front of the leaf stripping head or in front of each leaf stripping head and at a distance therefrom, said cutting means being for example formed by an alternating cutting bar.

7. A leaf stripper according to any one of claims 1 to 6 **characterised in that** it comprises means (31, 32, 33, 34) for moving its leaf stripping head (1) or each of its leaf stripping heads (1) away from or towards its axis of forward movement (Y-Y).

8. A leaf stripper according to any one of claims 1 to 7 **characterised in that** it comprises means (29, 30, 31, 32, 33, 34) for regulating the position of the leaf stripping drum (2) with respect to the vertical.

9. A leaf stripper according to any one of claims 1 to 8 **characterised in that** the carrier structure (31-32-33-34) of the leaf stripping head (1) or each leaf stripping head (1) comprises a preferably regulatable elastic support device (35) for correcting guidance deviations and for holding said leaf stripping head in flexible relationship with and under a constant pressure against the plant cover (MV).

10. A leaf stripper according to any one of claims 1 to 9 **characterised in that** the leaf stripping head or each leaf stripping head (1) is mounted with a capacity for pivotal movement about a vertical axis (64) so as to make it possible to follow the profile of the plant cover (MV) in the longitudinal direction.

11. A leaf stripper according to any one of claims 1 to 10 **characterised in that** the leaf stripping head or each leaf stripping head (1) is mounted with a capacity for tilting movement about a horizontal axis (64) in parallel relationship with the direction of forward movement of said leaf stripping head in the course of operation to follow the profile of the plant cover (MV) with respect to the verticality of the latter.

12. A leaf stripper according to any one of claims 7 to 11 **characterised in that** the mast (61-62) carrying the leaf stripping head is suspended from a horizontal deformable parallelogram (68, 71) permitting lateral displacement of said leaf stripping head.

13. A leaf stripper according to any one of claims 1 to 12 **characterised in that** it comprises two leaf stripping heads (1) disposed on respective sides of the axis of forward movement (Y-Y) of said leaf stripping head so as to be capable of bearing against the two sides of a row of vines (RV), wherein said leaf stripping heads can be set in operation:
- either each in turn in the to and fro movements of the leaf stripper if only one face of the row of vines is to be stripped of leaf;
- or simultaneously if leaf stripping is to be effected on each face of the row of vines.
